# EUROPÄISCHE PATENTANMELDUNG

(11) **EP 1 037 359 A1**
(43) Veröffentlichungstag der Anmeldung: **20.09.2000**
(21) Anmeldenummer: 00103096.4
(22) Anmeldetag: 16.02.2000
(51) Int. Cl.: H02K 1/27

(54) **Elektromotor mit einem Permanentmagnetrotor**

(30) Priorität: 13.03.1999 DE 19911261
(71) Anmelder: Mannesmann VDO Aktiengesellschaft, 60388 Frankfurt am Main (DE)
(72) Erfinder: Jones, Sigismund, 61267 Neu-Anspach (DE)
(74) Vertreter: Klein, Thomas, Dipl.-Ing.

(57) **Zusammenfassung**

Bei einem Elektromotor sind mehrere auf einem Rotor (2) angeordnete Magnetschalen (4, 6) von in einen Kern (8) des Rotors (2) eingreifenden Federn (11, 13) gegen den Kern (8) vorgespannt. Die Federn (11, 13) haben eine mit den Magnetschalen (4, 6) korrespondierende Gestalt. Die Magnetschalen (4, 6) werden hierdurch zuverlässig durch Formschluß auf dem Rotor (2) befestigt. Weiterhin gestaltet sich hierdurch der Elektromotor besonders kostengünstig.

## Beschreibung

Die Erfindung betrifft einen Elektromotor mit einem mehrere einzelne, voneinander getrennte, permanentmagnetische Magnetschalen aufweisenden Rotor, mit einem konzentrisch um den Rotor angeordnete Spulen aufweisenden Stator und mit einem Halteelement zur Vorspannung der Magnetschalen gegen einen Kern des Rotors.

Solche Elektromotoren werden häufig als Innenläufermotoren bezeichnet und sind aus der Praxis bekannt. Das Halteelement des aus der Praxis bekannten Elektromotors ist als dünnwandige, aus einem unmagnetischen Material gefertigte Hülse ausgebildet. Da Permanentmagnete in der Regel aus einem kostengünstigen und spröden Material hergestellt sind, weisen die Magnetschalen nur eine geringe Eigenstabilität auf und neigen zur Rißbildung. Die Hülse verhindert, daß die Magnete beim Transport oder im Betrieb zerstört werden und sich durch Zentrifugalkräfte im Betrieb ganz oder teilweise von dem Rotor lösen. Durch die unmagnetische Gestaltung der Hälse wird ein magnetischer Kurzschluß zwischen den Magneten verhindert. Da die Spulen auf dem Stator angeordnet sind, benötigt dieser Elektromotor keine störanfälligen Kohlebürsten zur Übertragung von elektrischer Energie auf die Spulen.

Nachteilig bei dem bekannten Elektromotor ist, daß sich die Magnetschalen trotz enger Toleranzen der Hülse und des Kerns des Rotors verschieben können. Im ungünstigsten Fall berühren sich dadurch zwei Magnetschalen und bilden einen magnetischen Kurzschluß. Dies führt zu einer starken Verringerung der Leistung des Elektromotors. Die Magnetschalen werden daher häufig an dem Kern des Rotors und der Hülse festgeklebt. Durch diese Gestaltung benötigt der Elektromotor für eine zuverlässige Befestigung der Magnetschalen an dem Rotor eine aufwendige und sehr kostenintensive Montage.

Der Erfindung liegt das Problem zugrunde, einen Elektromotor der eingangs genannten Art so zu gestalten, daß die Magnete besonders zuverlässig auf dem Rotor gehalten sind und daß er möglichst kostengünstig herstellbar ist.

Dieses Problem wird erfindungsgemäß dadurch gelöst, daß das Halteelement mehrere in den Kern des Rotors eingreifende Federn zur Vorspannung der Magnetschalen gegen den Kern hat und daß die Federn und/oder der Kern eine mit den Magnetschalen in axialer und radialer Richtung korrespondierende Gestalt aufweisen.

Durch diese Gestaltung sind die Magnete nach der Montage der Federn durch Formschluß zuverlässig an dem Rotor befestigt. Die in axialer und radialer Richtung mit den Magnetschalen korrespondierende Gestalt der Federn oder des Kerns des Rotors kann beispielsweise durch eine klammerartige Umgreifung der Magnetschalen durch die Federn oder durch eine Mulde in dem Kern zur Aufnahme der Magnetschalen erreicht werden. Dank der Erfindung wird eine hohe Zuverlässigkeit der Befestigung der Magnetschalen ohne deren Verklebung mit dem Rotor erreicht. Hierdurch ist der erfindungsgemäße Elektromotor besonders kostengünstig herstellbar.

Die Federn werden gemäß einer vorteilhaften Weiterbildung der Erfindung nach der Montage des Elektromotors zuverlässig an dem Kern des Rotors gehalten, wenn der Kern des Rotors parallel zu seiner Drehachse Nuten mit Hinterschneidungen zur Aufnahme von Haken der Federn hat.

Zwei benachbarte Federn halten sich gemäß einer anderen vorteilhaften Weiterbildung der Erfindung gegenseitig in ihrer vorgesehenen Lage am Rotor, wenn jeweils zwei aneinanderstoßende Haken zweier Federn in einer gemeinsamen Nut angeordnet sind.

Bei einer großen Anzahl von Magnetschalen könnten die Federn jeweils mehrere Magnetschalen gegen den Kern des Rotors vorspannen. Im Extremfall kann eine einzige, den gesamten Rotor umgreifende Feder zur Vorspannung aller Magnetschalen ausreichen. Die Magnetschalen sind jedoch gemäß einer anderen vorteilhaften Weiterbildung der Erfindung besonders zuverlässig in ihrer vorgesehenen Lage gehalten, wenn jeder der Magnetschalen eine einzige Feder zugeordnet ist.

Die Federn zweier benachbarter Magnetschalen könnten beispielsweise aus einem magnetisch gut leitenden Material gefertigt sein und zur Vermeidung eines magnetischen Kurzschlusses an ihren aneinandergrenzenden Bereichen voneinander beabstandet sein. Ein magnetischer Kurzschluß würde zu einer Beeinträchtigung der Leistung des Elektromotors führen. Die Federn können sich jedoch ohne Gefahr eines magnetischen Kurzschlusses berühren, wenn sie aus einem magnetisch schlechtleitenden Material gefertigt sind. Hierdurch können sich die Federn aneinander abstützen, was eine besonders hohe Stabilität des Rotors zur Folge hat.

Der Kern des Rotors hat gemäß einer anderen vorteilhaften Weiterbildung der Erfindung ein besonders niedriges Gewicht, wenn der Kern des Rotors aus ferromagnetischem Sintermetall gefertigt ist. Das niedrige Gewicht des Kerns führt zu einer geringen Massenträgheit des Rotors. Weiterhin läßt sich hierdurch der Kern kostengünstig nahezu beliebig gestalten und beispielsweise mit Ausnehmungen in seinen Stirnseiten zur weiteren Verringerung seines Gewichts versehen.

Die korrespondierende Gestalt der Federn mit den Magnet-schalen läßt sich gemäß einer anderen vorteilhaften Weiterbildung der Erfindung einfach erzeugen, wenn die Federn länger sind als die Magnetschalen und wenn die Federn Vorsprünge zur korrespondierenden Gestalt mit den Magnetschalen aufweisen.

Zur Vereinfachung der Montage des erfindungsgemäßen Elektromotors trägt es bei, wenn die Vorsprünge nasenförmig gestaltet sind. Hierbei können die nasenförmigen Vorsprünge als Anschlag dienen. Alternativ dazu lassen sich die nasenförmigen Vorsprünge auch von einer die Magnetschalen freigebenden Stellung in eine diese hintergreifende Stellung verschwenken.

Die Vorsprünge lassen sich gemäß einer anderen vorteilhaften Weiterbildung der Erfindung sehr einfach nach ihrer Montage an dem Rotor erzeugen, wenn die Vorsprünge als Umbördelungen ausgebildet sind.

Die Montage der Magnetschalen in ihrer vorgesehenen Lage gestaltet sich besonders einfach, wenn die Federn an ihren an die Haken angrenzenden Bereichen eine quer zu der Drehachse des Rotors gebogene Kufe und eine sich daran anschließende abgeflachte Rampe haben. Hierbei weist die Kufe durch ihre Formgebung Federeigenschaften zur Vorspannung der Magnetschalen auf. Weiterhin eignet sich hierdurch der erfindungsgemäße Elektromotor wegen der strömungsgünstigen Form des Rotors für einen Einsatz in einem flüssigen Medium.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Querschnitt durch einen erfindungsgemäßen Elektromotor,
- Fig. 2: den erfindungsgemäßen Elektromotor aus Figur 1 in einem Längsschnitt entlang der Linie II - II,
- Fig. 3: eine stark vergrößerte Darstellung der Einzelheit "X" aus Figur 1.

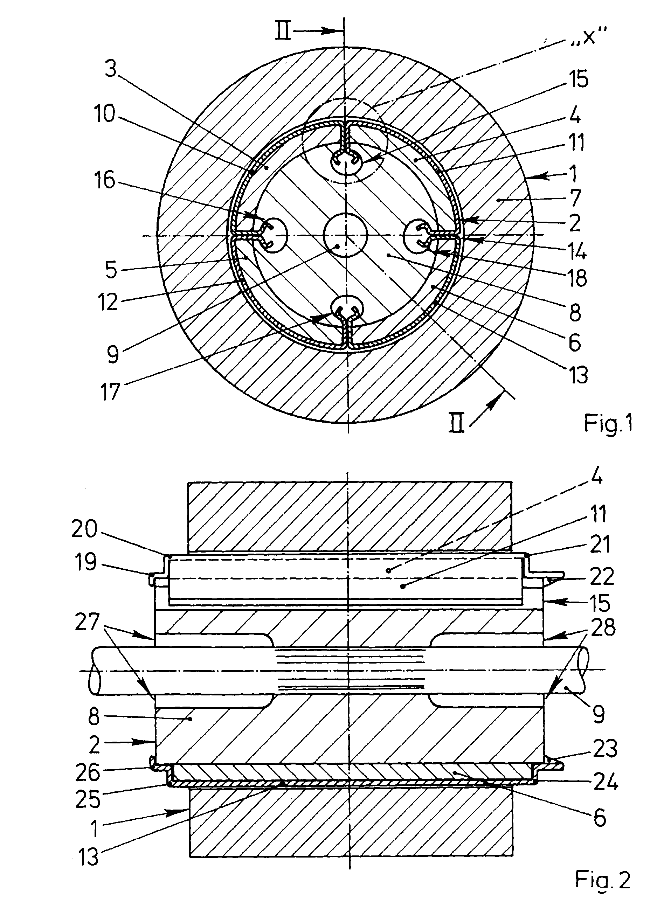

Die Figur 1 zeigt schematisch einen Querschnitt durch einen erfindungsgemäßen Elektromotor mit einem rohrförmigen Stator 1 und mit einem zylinderförmigen Rotor 2. Der Stator 1 weist Magnetschalen 3 - 6 des Rotors 2 gegenüber-stehende Spulen 7 auf. Der Rotor 2 ist mit einem Kern 8 aus Sintermetall auf einer drehbaren Welle 9 befestigt. Die Magnetschalen 3 - 6 werden von einem Halteelement 14 gegen den Kern vorgespannt. Das Halteelement 14 hat für jede der Magnetschalen 3 - 6 eine Feder 10 - 13. Der Kern 8 des Rotors 2 weist zur formschlüssigen Halterung der Federn 10 - 13 parallel zu seiner Drehachse verlaufende Nuten 15 - 18 auf.

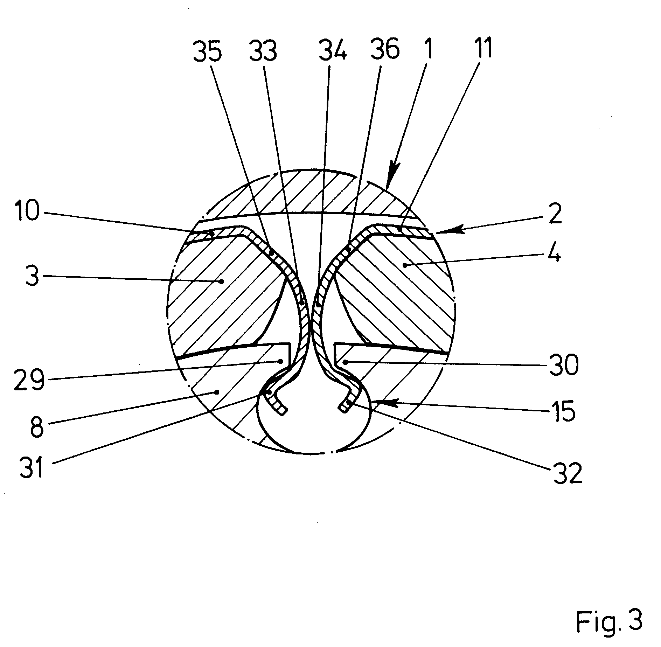

Die Figur 2 zeigt den Elektromotor aus Figur 1 in einer Schnittdarstellung entlang der Linie II - II. Hierbei ist zu erkennen, daß die Federn 11, 13 jeweils an ihren Enden als Umbördelungen und Nasen ausgebildete Vorsprünge 19 - 26 aufweisen. Jeweils zwei als Umbördelungen ausgebildete Vorsprünge 20, 21, 24, 25 liegen an den Magneten 4, 6 an. Die Federn 11, 13 haben daher eine den Magnetschalen 4, 6 entsprechende Gestalt. Die als Nasen ausgebildeten Vorsprünge 22, 23 und die an dem Kern 8 des Rotors 2 anliegenden, als Umbördelungen ausgebildeten Vorsprünge 19, 26 sichern die Federn 11, 13 zusammen mit den Magnetschalen 4, 6 in ihrer axialen Position. Weiterhin zeigt Figur 2, daß der Kern 8 des Rotors 2 an seinen Stirnseiten an die Welle 9 angrenzende Ausnehmungen 27, 28 aufweist.

Die Figur 3 zeigt in einer stark vergrößerten Ansicht der Einzelheit "X" aus Figur 1 die Befestigung der Federn 10, 11 an dem Kern 8 des Rotors 2. Hierbei ist zu erkennen, daß die Nuten 15 des Kerns 8 Hinterschneidungen 29, 30 aufweisen, die von Haken 31, 32 der Federn 10, 11 hintergriffen werden. Hierdurch werden die Magnetschalen 3, 4 gegen den Kern 8 des Rotors 2 vorgespannt. Weiterhin zeigt Figur 3, daß sich die beiden benachbarten Federn 10, 11 aneinander abstützen. Die Federn 10, 11 haben an ihren an die Haken 31, 32 angrenzenden Bereichen eine quer zu der Drehachse des Rotors 2 gebogene Kufe 33, 34 und eine sich daran anschließende abgeflachte Rampe 35, 36.

## Patentansprüche

1. Elektromotor mit einem mehrere einzelne, voneinander getrennte, permanentmagnetische Magnetschalen aufweisenden Rotor, mit einem konzentrisch um den Rotor angeordnete Spulen aufweisenden Stator und mit einem Halteelement zur Vorspannung der Magnet schalen gegen einen Kern des Rotors, **dadurch gekennzeichnet**, daß das Halteelement (14) mehrere in den Kern (8) des Rotors (2) eingreifende Federn (10 - 13) zur Vorspannung der Magnetschalen (3 - 6) gegen den Kern (8) hat und daß die Federn (10 - 13) und/oder der Kern (8) eine mit den Magnetschalen (3 - 6) in axialer und radialer Richtung korrespondierende Gestalt aufweisen.

2. Elektromotor nach Anspruch 1, **dadurch gekennzeichnet**, daß der Kern (8) des Rotors (2) parallel zu seiner Drehachse Nuten (15 - 18) mit Hinterschneidungen (29, 30) zur Aufnahme von Haken (31, 32) der Federn (10 - 13) hat.

3. Elektromotor nach Anspruch 1 oder 2, **dadurch gekennzeichnet**, daß jeweils zwei aneinanderstoßende Haken (31, 32) zweier Federn (10 - 13) in einer gemeinsamen Nut (15 - 18) angeordnet sind.

4. Elektromotor nach zumindest einem der vorhergehenden Ansprüche, **dadurch gekennzeichnet**, daß jeder der Magnet-schalen (3 - 6) eine einzige Feder (10 - 13) zugeordnet ist.

5. Elektromotor nach zumindest einem der vorhergehenden Ansprüche, **dadurch gekennzeichnet**, daß die Federn (10 - 13) aus einem magnetisch schlechtleitenden Material gefertigt sind.

6. Elektromotor nach zumindest einem der vorhergehenden Ansprüche, **dadurch gekennzeichnet**, daß der Kern (8) des Rotors (2) aus ferromagnetischem Sintermetall gefertigt ist.

7. Elektromotor nach zumindest einem der vorhergehenden Ansprüche, **dadurch gekennzeichnet**, daß die Federn (10 - 13) länger sind als die Magnetschalen (3 - 6) und daß die Federn (10 - 13) Vorsprünge (19 - 26) zur korrespondierenden Gestalt mit den Magnetschalen (3 - 6) aufweisen.

8. Elektromotor nach zumindest einem der vorhergehenden Ansprüche, **dadurch gekennzeichnet**, daß die Vorsprünge (22, 23) nasenförmig gestaltet sind.

9. Elektromotor nach zumindest einem der vorhergehenden Ansprüche, **dadurch gekennzeichnet**, daß die Vorsprünge (19 - 21, 24 - 26) als Umbördelungen ausgebildet sind.

10. Elektromotor nach zumindest einem der vorhergehenden Ansprüche, **dadurch gekennzeichnet**, daß die Federn (10 - 13) an ihren an die Haken (31, 32) angrenzenden Bereichen eine quer zu der Drehachse des Rotors (2) gebogene Kufe (33, 34) und eine sich daran anschließende abgeflachte Rampe (35 - 36) haben.
